# EUROPEAN PATENT APPLICATION

(11) **EP 1 927 796 A1**
(43) Date of publication of application: **04.06.2008**
(21) Application number: 07254325.9
(22) Date of filing: 31.10.2007
(51) Int. Cl.: F16J 15/02, F16J 15/06, F16J 15/12

(54) **Seal arrangement**

(30) Priority: 02.12.2006 GB 0624118
(71) Applicant: Rolls-Royce plc, 65 Buckingham Gate London SW1E 6AT (GB)
(72) Inventor: Handley, Brian Alex, Alvaston, Derby, DE24 0AA (GB); Mullender, Andrew James, Beeston, Nottingham, NG9 1FN (GB)
(74) Representative: Gunn, Michael Alan

(57) **Abstract**

A sealed assembly comprising two bodies (20, 30) and an elastomeric seal (42) therebetween wherein the seal (42) comprises an internal web (42) that is aligned in the general direction of a shear force between the two bodies (20, 30).

## Description

The present invention relates to a seal arrangement suitable for sealing between two bodies and subject to compression.

Conventional elastomeric fire seals are constructed from silicon rubber and fibres and are used widely on aero engines. The fibres are usually glass, ceramic or steel. Geometric constraints sometimes result in seals closing between surfaces that slide over one another shearing the seal. This shearing often results in severe crimping damage causing leakage and ultimately seal failure. The option to withstand the damage by using heavier duty seals greatly increases the closing load required which further exacerbates the shearing problem and increases the load-carrying requirement and hence cost and weight of the seal and its installation.

Therefore it is an object of the present invention to provide a seal configuration that prevents rucking and does not significantly increase sealing forces to overcome the above mentioned problems.

In accordance with the present invention an elastomeric seal comprises an internal web.

Preferably, the internal web comprises reinforcement.

Preferably, the reinforcement is a fabric.

Alternatively, two or more webs are provided that may or may not be angled to one another. Preferably, the angle is between 45 and 90 degrees, but may be between 30 and 150 degrees.

Preferably, a sealed assembly comprises two bodies and a seal therebetween, wherein the seal is as claimed in any one of the preceding paragraphs, the at least one web is aligned in the general direction of a shear force between the two bodies.

Preferably, the least one web is aligned at an angle between normal and 60 degrees to at least one of the bodies.

The present invention will be more fully described by way of example with reference to the accompanying drawings in which:
Figure 1 is a schematic section of part of a ducted fan gas turbine engine attached to an aircraft structure;
Figure 2 is a section CC in Figure 1 and shows a general configuration of a nacelle having openable C-shaped ducts;
Figure 3 is an enlarged view on D in Figure 2 showing a seal between the C-shaped doors and a bifurcation part;
Figure 4 is a cross-section through a first embodiment of a seal in accordance with the present invention;;
Figure 5 is a side view of the first embodiment of the seal;
Figure 6 is a cross-section through a second embodiment of a seal in accordance with the present invention;
Figure 7 is a cross-section through a seal between two angled bodies in accordance with the present invention;
Figure 8 is a cross-section through a third embodiment of a seal in accordance with the present invention.

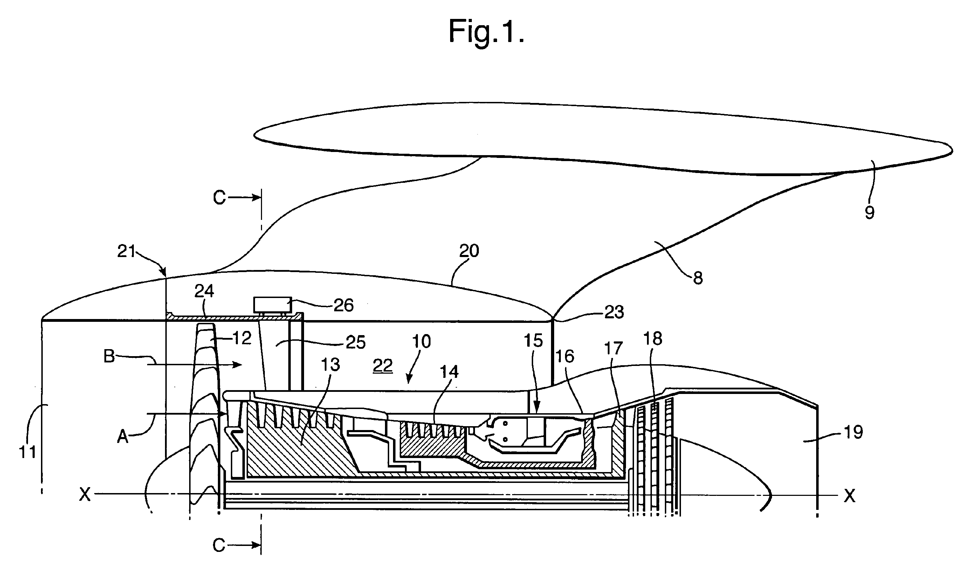

Referring to Figure 1, a ducted fan gas turbine engine generally indicated at 10 has a principal and rotational axis XX. The engine 10 is attached to the aircraft 9, usually to a wing or fuselage, via a pylon 8.

The engine 10 comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core exhaust nozzle 19. A nacelle 21 generally surrounds the engine 10 and comprises the intake 11, two generally C-shaped ducts 20, which define bypass ducts 22, and an exhaust nozzle 23.

The gas turbine engine 10 works in the conventional manner so that air entering the intake 11 is accelerated by the fan 12 to produce two air flows: a first airflow A into the intermediate pressure compressor 13 and a second airflow B which passes through the bypass ducts 22 to provide propulsive thrust. The intermediate pressure compressor 13 compresses the airflow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines 16, 17, 18 respectively drive the high and intermediate pressure compressors 14, 13 and the fan 12 by suitable interconnecting shafts.

The fan 12 is circumferentially surrounded by a structural member in the form of a fan casing 24, which is supported by an annular array of outlet guide vanes 25. Engine accessories such as the EEC 26 and oil tank are mounted on the fan casing 24.

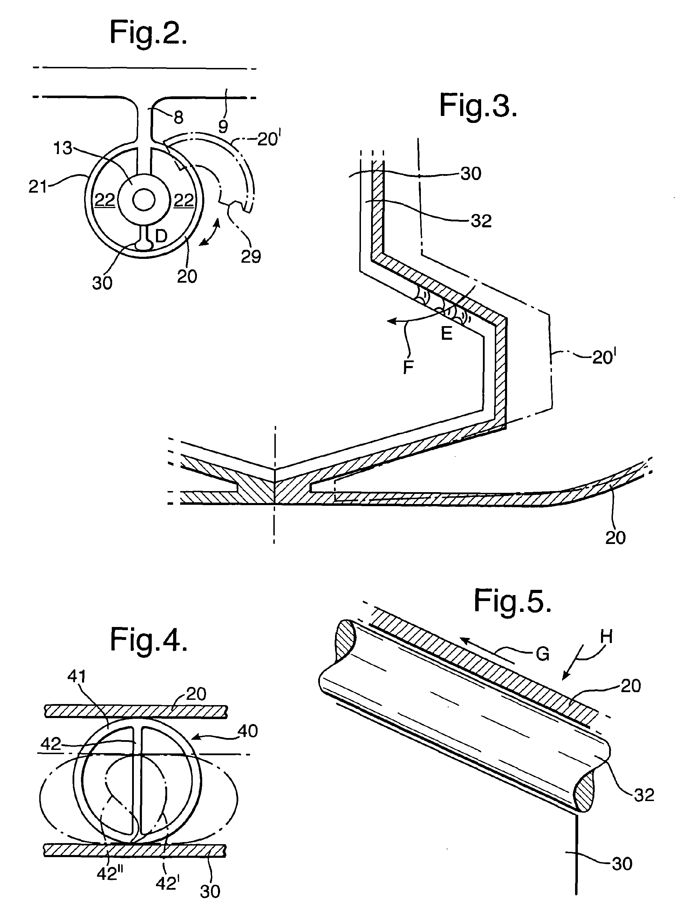

In Figure 2 the two generally C-shaped ducts 20 are hinged at the pylon 8 or sometimes at the top of the engine 10 and are rotatably openable to allow access to the engine 10. Such a configuration is well known in the art. The C-shaped ducts 20 close abutting a bifurcation 30 at their free ends 29. There is also a bifurcation at the top dead centre of the engine 10. It is important for the C-shaped ducts 20 and bifurcation 30 to be sealed to prevent air leakage and to act as a fire barrier.

In Figure 3 the bifurcation 30 is partly formed by a disconnect panel 30, through which electronics and fluid pipes are routed thereby enabling easy disconnect for engine servicing. The disconnect panel 30 has a conventional flexible seal 32 that is made from a generally circular walled and reinforced rubber element. In service it has been found that the closing action of the C-shaped ducts 20, direction indicated by arrow F (also see arrows G and H in Fig 5), against the seal 32 causes the seal 32 to ruck, pulling it away from the disconnect panel 30 as shown in region E. Thus the seal is broken and leakage will occur with the potential of fire moving across the seal 32 also. This is clearly problematic.

One prior art solution has been to apply a lubricant to the seal 32 or the free end 29 of the C-shaped ducts 20, however, this is not always carried out during service and has been found to have variable success.

Referring now to Figures 4 and 5, an elastomeric seal 40 in accordance with the present invention comprises a generally circular wall 41 and a web 42. The walls 41 and web 42 are integral and manufactured as a unitary part. A preferred material exhibits resilience and durability, such as rubber or silicon rubber. In this first embodiment, the web 42 spans between the 12 O'clock and 6 O'clock positions in Figure 4 and in the plane of the paper in Figure 5. The web 42 is relatively thin and flexible under compression so that when the seal 40 is compressed between the C-shaped duct 20 and the panel 30 (force arrow H) it deforms as shown by the dashed line 42'. Alternatively, the web may deflect into an S-shape 42". However, as the web 42 is aligned in the direction of the shearing force (arrow G) and as it is relatively long (to its width) it has a high area to resist such tensile shear (arrow G) and the seal 32 is not rucked as with the prior art seal. Thus the compressive load or closure load H is not significantly increased over a web-less seal, yet the seal 40 is particularly resistant to shear loads G.

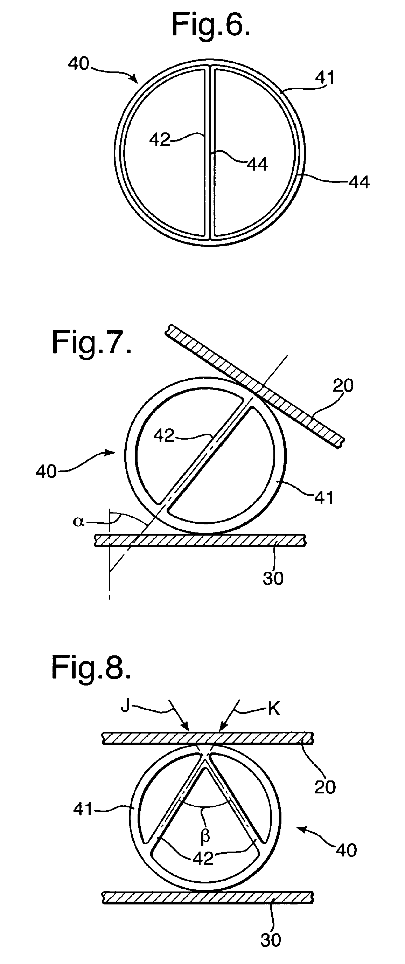

In Figure 6, the second embodiment of the seal 32 comprises a web 42 including a reinforcing 44 laminate. Although the reinforcement laminate 44 may increase its compressive stiffness slightly it is preferable for the reinforcement to be a thin, flexible fabric such that it restrains tensile forces in the form of shear forces but does not significantly contribute to compressive resistance. The fabric 44 is also present in the walls 41.

The fabric may be a woven material comprising fibreglass, carbon fibres or metal oxide fibres. Other suitable materials will be apparent to the skilled person.

In Figure 7, a sealed assembly, such as the C-shaped ducts 20 and the bifurcation 30, the seal 40 is arranged so that the web 42 is aligned normal to the surface of the contacting surface of the C-shaped ducts 20 and aligned with any the direction of movement between each body 20, 30. Thus any shear force may be carried through the web 42. Alternatively, the web 42 is aligned at an angle α between normal and 60 degrees to at least one of the bodies 20, 30.

Referring now to Figure 8, a third embodiment of the present invention is a seal 40 comprising two webs 42. The two webs 42 are angled β to one another. Although the figure shows the two webs 42 joining they do not necessarily need to do so. This seal 40 is particularly useful where the seal 40 experiences two or more differently directed shear loads in service e.g. shear forces having a component into the page and a component angled in the direction shown by arrows J and K. Each web 42 being angled generally in the direction of the component forces j and K. In most applications the angle of the applied shear loads is likely to be between 45 and 90 degrees, but may be between 30 and 150 degrees.

## Claims

1. An elastomeric seal (32) comprising an internal web (42).

2. An elastomeric seal (32) as claimed in claim 1 wherein the internal web (42) comprises reinforcement (44).

3. An elastomeric seal (32) as claimed in claim 2 wherein the reinforcement (44) is a fabric.

4. An elastomeric seal (32) as claimed in any one of claims 1-3 wherein two or more webs (42) are provided.

5. An elastomeric seal (32) as claimed in claim 4 wherein two webs (42) are angled to one another.

6. An elastomeric seal (32) as claimed in claim 5 wherein the angle is between 30 and 150 degrees.

7. An elastomeric seal (32) as claimed in claim 5 wherein the angle is between 45 and 90 degrees.

8. An elastomeric sealed assembly comprising two bodies (20, 30) and a seal (42) therebetween wherein the seal (42) is as claimed in any one of the preceding claims, the at least one web (42) is aligned in the general direction of a shear force between the two bodies (20, 30).

9. An elastomeric sealed assembly as claimed in claim 8 wherein the at least one web (42) is aligned at an angle between normal and 60 degrees to at least one of the bodies (20, 30).
